(19) Europäisches Patentamt
European Patent Office
Office européen des brevets

(11) EP 0 808 867 A1

# (12) EUROPÄISCHE PATENTANMELDUNG

(43) Veröffentlichungstag:
**26.11.1997 Patentblatt 1997/48**

(51) Int. Cl.$^6$: **C08K 3/38**, C08L 83/04

(21) Anmeldenummer: **97108281.3**

(22) Anmeldetag: **22.05.1997**

(84) Benannte Vertragsstaaten:
**AT BE CH DE ES FI FR GB IT LI NL SE**

(30) Priorität: **23.05.1996 DE 19620816**

(71) Anmelder: **Wacker-Chemie GmbH**
**81737 München (DE)**

(72) Erfinder:
- **Söllradl, Herbert, Dr.**
  **84547 Emmerting (DE)**
- **Balk, Gerhard**
  **84508 Burgkirchen / Pirach (DE)**
- **Kurz, Alfred**
  **84489 Burghausen (DE)**

(74) Vertreter:
**Deffner-Lehner, Maria, Dr. et al**
**Wacker-Chemie GmbH,**
**Zentralabteilung PLM,**
**Hanns-Seidel-Platz 4**
**81737 München (DE)**

## (54) Borverbindungen als Flammschutzmittel in vernetzbaren Organopolysiloxan-Massen

(57) Die Verwendung von Borverbindungen ausgewählt aus der Gruppe von Borcarbid und Metallboriden im Gemisch mit nicht verstärkenden Füllstoffen, mit der Maßgabe, daß mindestens 75 Gew.-% der nicht verstärkenden Füllstoffe bis 1200°C thermisch stabil sind, als Flammschutzmittel in zu flammabweisenden Elastomeren vernetzbaren Organopolysiloxanmassen wird beschrieben.

EP 0 808 867 A1

Printed by Rank Xerox (UK) Business Services
2.14.23/3.4

## Beschreibung

Gemäß US-A 3,652,488 bzw. der korrespondierenden DE-C 20 34 919 wird eine Flammabweisung durch Platinzusatz erhalten und durch Zugabe von Ruß verstärkt. Dadurch sind diese Massen naturgemäß schwarz. Die bei Fugendichtungsmassen öfters erwünschten hellen Farbtöne sind nicht darstellbar.

In US-A 3,821,140 bzw. der korrespondierenden DE-C 23 00 504 und US-A 3,677,999 sind flammabweisende oder selbstverlöschende Massen beschrieben, die durch Zugabe von Metalloxiden oder Hydraten von Metalloxiden, wie Aluminiumoxidhydrat, hergestellt werden. Bei erhöhten Temperaturen im Verlauf eines Brandes wird aus diesen Produkten Wasser abgespalten, das zwar kurzfristig die Entflammbarkeit verringert, unter den erhöhten Temperaturen, die bei längerer Branddauer auftreten, aber zu einer Destabilisierung des Dimethylpolysiloxans durch Hydrolyse beiträgt. Aus diesen Hydraten von Metalloxiden bilden sich beim Zerfall meist basische Oxide, wie Magnesiumoxid oder Aluminiumoxid, die die Zersetzung unter diesen Bedingungen weiter verstärken. Die Siliconmatrix zerfällt dann völlig durch Depolymerisation. Auch Kombinationen von Metalloxiden/Metalloxidhydraten mit Graphit sind aus US-A 4,405,425 bzw. der korrespondierenden EP-B 40 750 bekannt.

Gemäß DE-B 29 09 462 und DE-A 30 41 031 werden durch Zugabe von halogenierten Diphenylverbindungen, z.B. Octabromdiphenylether, flammfeste Polysiloxanmassen hergestellt. Im Brandfall entstehen allerdings aus diesen Produkten polyhalogenierte Dibenzofurane oder Dibenzodioxine, die aufgrund der bekannten toxikologischen Problematik unerwünscht sind. Die Anwendung dieser Produkte dürfte in Zukunft daher nur noch eingeschränkt möglich sein.

Keine der oben genannten Methoden führt zu Produkten, die im Brandfall ihr Volumen vergrößern und damit einen sogenannten Intumeszenzeffekt zeigen. Dies kann nach US-A 5,262,454 bzw. der korrespondierenden DE-A 40 13 161 und US-A 4,694,030 bzw. der korrespondierenden DE-A 36 02 888 durch die Zugabe von blähfähigen Graphitverbindungen sowie weiterer Additive, wie stickstoffhaltiger Polyphosphate oder auch durch Glashohlkugeln erreicht werden. Aber auch hier zeigt sich wieder, daß durch die Anwesenheit von Graphit die Produkte schwarz sind und daher keine hellen Farbtöne hergestellt werden können. Außerdem sind die Oberflächen der Siliconmassen durch die Zugabe des Blähgraphites oder der Glashohlkugeln rauh und unansehnlich, weil diese Produkte nicht in den notwendigen kleinen Korngrößen (<20μm) verfügbar sind.

Borverbindungen werden in Siliconmassen wegen ihrer neutronenabsorbierender Wirkung eingesetzt. So ist die Verwendung von Borcarbid zu diesem Zweck aus US-A 4,176,093 bekannt.

Es bestand die Aufgabe, zu flammabweisende Elastomere vernetzbare Organopolysiloxanmassen bereitzustellen, mit denen im Brandfall die im Stand der Technik auftretenden Nachteile vermieden werden. Weiterhin bestand die Aufgabe, zu flammabweisende Elastomere vernetzbare Organopolysiloxanmassen bereitzustellen deren Eigenfarbe möglichst hell sein soll und womit Elastomere erhalten werden, die im Brandfall ihr Volumen durch Aufschäumen vergrößeren, wobei der Schaum mechanisch möglichst stabil sein soll, die Fugen möglichst dicht verschließen soll und eine thermische Isolierwirkung haben soll, die einen Temperaturanstieg auf der Seite des Bauteiles, der dem Feuer abgewandt ist, möglichst lange verzögern soll. Die Aufgabe wird durch die Erfindung gelöst.

Gegenstand der Erfindung ist die Verwendung von Borverbindungen ausgewählt aus der Gruppe von Borcarbid und Metallboriden im Gemisch mit nicht verstärkenden Füllstoffen, mit der Maßgabe, daß mindestens 75 Gew.-% der nicht verstärkenden Füllstofe bis 1200°C thermisch stabil sind, als Flammschutzmittel in zu flammabweisenden Elastomeren vernetzbaren Organopolysiloxanmassen.

Beispiele für Borverbindungen sind Borcarbid, Zinkborid, Aluminiumborid, Titanborid und Calciumborid.

Es kann eine Art von Borverbindung, es kann aber auch ein Gemisch aus mindestens zwei Borverbindungen eingesetzt werden.

Der überwiegende Anteil der nicht verstärkendenen Füllstoffe, also Füllstoffe mit einer spezifischen BET-Oberfläche von weniger als 50 $m^2/g$, muß bei den überlicherweise auftretenden Brandtemperaturen stabil sein, damit keine Zersetzung unter Volumenverlust oder eine Destabilisierung des Organopolysiloxangerüstes durch Bildung von unerwünschten Reaktionsprodukten eintritt. Ungeeignete Füllstoffe sind Calciumsulfat, Oxidhydrate des Aluminiums oder Magnesiums, wobei dann unerwünschte Reaktionsprodukte dampfförmiges Wasser sind bzw. auch alkalische Oxide sind, die bei der Zersetzung entstehen.

Ein Anteil von Calcium- oder Calcium-Magnesiumcarbonaten, die unter Volumenverlust Kohlendioxid abspalten, bis zu 25 Gew.-% der Gesamtmenge an nicht verstärkenden Füllstoffen ist möglich.

Bevorzugt werden als nicht verstärkende Füllstoffe nur solche verwendet, die bis 1200°C thermisch stabil sind.

Beispiele für nicht verstärkende Füllstoff, die bis 1200°C thermisch stabil sind, sind natürliche und synthetische Siliciumdioxide, wie Diatomeenerde, amorphe und kristalline Quarze, Silikate, wie Glimmer, Kaolin, Talke und Perlite, silikatische Füllstoffe und natürliches und gefälltes Bariumsulfat.

Es kann eine Art von Füllstoff, es kann aber auch ein Gemisch aus mindestens zwei Füllstoffen eingesetzt werden.

Durch die thermische Zersetzung von Organopolysiloxanmassen ab einer Temperatur von etwa 400°C bilden sich gasförmige, niedermolekulare Organosiliciumverbindungen, die zu einem Aufblähen der Siliconelastomere beim Entweichen führen. Ohne die erfindungsgemäßen Zusätze würde sich das Organopolysiloxangerüst im Verlauf des Brandes völlig zersetzen. Durch die erfindungsgemäßen Zusätze kommt es überraschend zur Bildung eines festen,

schaumartigen Rückstandes. Das bei der thermischen Zersetzung des Organopolysiloxans entstehende Siliciumdioxid und die erfindungsgemäßen Zusätze versintern zu einem mechanisch festen Schaum. Als Treibmittel wirken dabei die niedermolekularen Verbindungen, die sich bei der Zersetzung des Organopolysiloxans bilden. Zusätzliche Treibmittel sind nicht nötig. Dieser schaumartige Rückstand zeigt im Brandfall auch eine verbesserte Isolierwirkung gegenüber nicht aufschäumenden Fugenmassen und ist mechanisch belastbar im Gegensatz zu nicht aufschäumenden Fugenmassen, die sich zu einem mechanisch nicht belastbaren, pulverförmigen Rückstand zersetzen. Volumenverlust und Rißbildung in den verbleibenden Fugenmassen werden vermieden, so daß keine Brandgase auf die Rückseite der abgedichteten Bauteile gelangen und eine Brandausbreitung damit vermieden wird.

Die Organopolysiloxanmassen, die die erfindungsgemäßen Zusätze enthalten, umfassen sogenannte kondensationsvernetzende 1-Komponentenmassen und 2-Komponentenmassen und additionsvernetzende 2-Komponentenmassen auf Grundlage von Organopolysiloxanen.

Bei den Organopolysiloxanmassen ohne die erfindungsgemäßen Zusätze handelt es sich um dieselben Organopolysiloxanmassen, die auch für die bisher bekannten zu flammabweisenden Elastomeren vernetzbaren Organopolysiloxanmassen verwendet werden konnten.

Die Organopolysiloxane in den erfindungsgemäßen Massen können beliebige Organopolysiloxane sein, die auch in den bisher bekannten, zu flammabweisenden Elastomeren vernetzbaren Organopolysiloxanmassen vorliegen konnten.

Es handelt sich bei den kondensationsvernetzenden Massen vorzugsweise um kondensationsfähige Endgruppen aufweisende Organopolysiloxane der allgemeinen Formel

$$XR_2SiO(R_2SiO)_nSiR_2X \qquad (I)$$

wobei

R gleiche oder verschiedene, einwertige, gegebenenfalls substituierte Kohlenwasserstoffreste mit 1 bis 18 Kohlenstoffatomen je Rest,
X eine Hydroxylgruppe und
n eine ganze Zahl von mindestens 10 bedeutet.

Die Hydroxylgruppen X in der oben angegebenen Formel (I) können, falls erwünscht, vollständig oder teilweise durch andere kondensationsfähige Gruppen, wie Alkoxygruppen mit 1 bis 4 Kohlenstoffatomen je Gruppe, ersetzt sein.

Es handelt sich bei den additionsvernetzenden Massen vorzugsweise um aliphatische Kohlenstoff-Kohlenstoff Mehrfachbindungen aufweisende Organopolysiloxane der allgemeinen Formel

$$Y_aR^1_{3-a}SiO(R^1_2SiO)_b(R^1YSiO)_cSiR^1_{3-a}Y_a \qquad (II)$$

wobei

$R^1$ gleiche oder verschiedene, einwertige, gegebenenfalls substituierte Kohlenwasserstoffreste mit 1 bis 18 Kohlenstoffatomen je Rest,
Y einen einwertigen Kohlenwasserstoffrest mit aliphatischer Kohlenstoff-Kohlenstoff Mehrfachbindung, bevorzugt Alkenylrest, besonders bevorzugt Vinyl- oder Hexenylrest und
a 0 oder 1,
b eine ganze Zahl im Wert von 20 bis 10000 und
c 0 oder eine ganze Zahl im Wert von 1 bis 300 bedeutet.

Innerhalb bzw. entlang der Siloxankette der Organopolysiloxane der oben angegebenen Formeln (I) und (II) können, was durch derartige Formeln üblicherweise nicht dargestellt wird, zusätzlich zu den Diorganosiloxaneinheiten $R_2SiO$ noch andere Siloxaneinheiten vorliegen. Beispiele für solche anderen, meist nur als Verunreinigung vorliegenden Siloxaneinheiten sind solche der Formeln $RSiO_{3/2}$, $R3SiO_{1/2}$ und $SiO_{4/2}$, wobei R die oben dafür angegebene Bedeutung hat.

Es kann eine Art von Organopolysiloxan oder mehrere Arten von Organopolysiloxane eingesetzt werden.

Die Organopolysiloxane weisen eine Viskosität von vorzugsweise 1 000 bis 300 000 mPa•s bei 25°C, bevorzugt 6000 bis 300000 mPa•s bei 25°C und besonders bevorzugt 20000 bis 300000 mPa•s bei 25°C auf.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest, Dodecylreste, wie der n-Dodecylrest; Octadecylreste, wie der n-Octadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für substituierte Reste R sind Cyanalkylreste, wie der β-Cyanethylrest, und halogenierte Kohlenwasserstoffreste, beispielsweise Halogenalkylreste, wie der 3,3,3-Trifluor-n-propylrest, der 2,2,2,2',2',2'-Hexafluorisopropylrest, der Heptafluorisopropylrest, und Halogenarylreste, wie der o-, m-, und p-Chlorphenylrest.

Die Beispiele für Reste R gelten mit Ausnahme der Alkenylreste für die Reste $R^1$. Beispiele für substituierte Reste R gelten im vollen Umfang für substituierte Reste $R^1$.

Schon wegen der leichteren Zugänglichkeit sind vorzugsweise mindestens 50 %, bevorzugt mindestens 90 %, der Anzahl der Reste R bzw. $R^1$ in den Organopolysiloxanen Methylreste.

Als Vernetzungsmittel für die Vernetzung der kondensationsvernetzenden Organopolysiloxane werden vorzugsweise feuchtigkeitsempfindliche Silane der allgemeinen Formel

$$R_xSiZ_{4-x} \qquad \text{(III)}$$

und/oder deren Teilhydrolysate, die bevorzugt 2 bis 10 Siliciumatome aufweisen,
wobei

R die oben dafür angegebene Bedeutung hat,
x 0 oder 1 ist und
Z gleiche oder verschiedene hydrolysierbare Gruppen ausgewählt aus der Gruppe von

Acyloxygruppen $-OCOR^2$

gegebenenfalls substituierte

Kohlenwasserstoffoxygruppen $-OR^3$
Aminogruppen $-NR^4_2$
Oximgruppen $-ON{=}A$

Amidgruppen

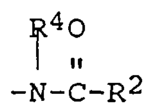

Aminoxygruppen $-O-NR^4_2$
Enoxygruppen

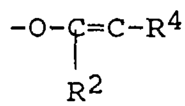

wobei

$R^2$ einen einwertigen Kohlenwasserstoffrest mit 1 bis 12 Kohlenstoffatomen,
$R^3$ einen einwertigen Kohlenwasserstoffrest mit 1 bis 4 Kohlenstoffatomen,
$R^4$ Wasserstoff oder gleiche oder verschiedene, einwertige Kohlenwasserstoffreste mit 1 bis 12 Kohlenstoffatomen und
A gleiche oder verschiedene Reste der Formel

$$R^5_2C{=} \text{ oder } R^6C{=}$$

bedeuten, wobei $R^5$ gleiche oder verschiedene, einwertige Kohlenwasserstoffreste mit 1 bis 5 Kohlenstoffatomen je Rest und $R^6$ einen zweiwertigen Kohlenwasserstoffrest mit 5 bis 6 Kohlenstoffatomen je Rest bedeuten,

verwendet.

Beispiele für Acyloxygruppen sind Acetoxy- und Formyloxygruppen und 2-Ethylhexanoxygruppen.

Beispiele für Kohlenwasserstoffoxygruppen sind Methoxy-, Ethoxy-, n-Propyloxy-, Isopropyloxy-, n-Butyloxygruppen.

Beispiele für substituierte Kohlenwasserstoffoxygruppen sind durch Alkoxygruppen substituierte Kohlenwasserstoffoxygruppen, wie Methoxyethylenoxy-, Ethoxyethylenoxy- und Methoxyisopropylenoxygruppen.

Beispiele für Aminogruppen sind n-Butylamino-, sec.-Butylamino-, Cyclohexylaminogruppen.

Beispiele für Oximgruppen sind Methylethylketoximgruppen Methylisobutylketoximgruppen, Methyl n-amylketoximgruppen und Dimethylketoximgruppen.

Beispiele für Amidgruppen sind n-Methylbenzamidogruppen und n-Methylacetamidogruppen.

Ein Beispiel für eine Aminoxygruppe ist die Hydroxylamingruppe.

Ein Beispiel für eine Enoxygruppe ist die Isoprenoxygruppe.

Für die Vernetzung von kondensationsvernetzenden 2-Komponentenmassen wird unmittelbar vor der Anwendung die Härterkomponente zugemischt. Diese Härterkomponente ist vorzugsweise ein Tetraalkoxysilan, bevorzugt Tetraethyl- oder Tetrapropylsilicat.

Als Vernetzungskatalysatoren werden bei den kondensationsvernetzenden 1- und 2-Komponentenmassen die dem Fachmann bekannten Kondensationskatalysatoren verwendet.

Beispiele für Kondensationskatalysatoren sind Butyltitanate und organische Zinnverbindungen, wie Di-n-butylzinndiacetat, Di-n-butylzinndilaurat und Umsetzungsprodukte von je Molekül mindestens zwei über Sauerstoff an Silicium gebundene, gegebenenfalls durch eine Alkoxygruppe substituierte, einwertige Kohlenwasserstoffreste als hydrolysierbare Gruppen aufweisendem Silan oder dessen Oligomer mit Diorganozinndiacylat, wobei in diesen Umsetzungsprodukten alle Valenzen der Zinnatome durch Sauerstoffatome der Gruppierung

$$\equiv SiOSn \equiv$$

bzw. durch SnC-gebundene, einwertige organische Reste abgesättigt sind. Die Herstellung derartiger Umsetzungsprodukte ist in US 4 460 761 (ausgegeben 17. Juli 1984, A. Schiller et al., Wacker-Chemie GmbH) eingehend beschrieben.

Nach der Applikation der Organopolysiloxanmassen erfolgt die Vernetzung zu Siliconelastomeren durch Zutritt von Luftfeuchtigkeit.

Bei additionsvernetzenden 2-Komponentenmassen werden als Vernetzungsmittel Si-gebundene Wasserstoffatome aufweisende Organopolysiloxane verwendet. Es handelt sich dabei vorzugsweise um solche der allgemeinen Formel

$$H_dR^1_{3-d}SiO(R^1_2SiO)_e(R^1HSiO)_fSiR^1_{3-d}H_d$$

wobei

$R^1$ die oben dafür angegebene Bedeutung hat,
d 0 oder 1,
e 0 oder eine ganze Zahl im Wert von 1 bis 500 und
f eine ganze Zahl im Wert von 1 bis 200 ist,
mit der Maßgabe, daß durchschnittlich je Molekül mindestens 3 Si-gebundene Wasserstoffatome enthalten sind.

Die Härterkomponente wird erst unmittelbar vor der Anwendung zugemischt.

Als Vernetzungskatalysatoren werden im Falle der Additionsvernetzung vorzugsweise Platinmetalle und/oder deren Verbindungen, bevorzugt Platin und/oder dessen Verbindungen eingesetzt. Es können hier alle Katalysatoren eingesetzt werden, die auch bisher zur Addition von direkt an Si-Atome gebundenen Wasserstoffatomen an aliphatisch ungesättigte Verbindungen eingesetzt wurden. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z. B. $PtCl_4$, $H_2PtCl_6{*}6H_2O$, $Na_2PtCl_4{*}4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6{*}6H_2O$ und Cyclohexanon, Platin-Vinylsiloxankomplexe, insbesondere Platin-Divinyltetramethyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin, oder Ammonium-Platinkomplexe gemäß EP-B 110 370.

Zusätzlich zu den Organopolysiloxanen, Vernetzungsmitteln und Vernetzungskatalysatoren können die erfindungsgemäßen Massen gegebenenfalls weitere Stoffe enthalten, wie verstärkende Füllstoffe, Weichmacher, wie durch Trimethylsiloxygruppen endblockierte Dimethylpolysiloxane oder Methylphenylpolysiloxane, die eine Viskosität von vorzugsweise 10 bis 5 000 mPa • s bei 25°C, bevorzugt 35 bis 1000 mPa • s bei 25°C, aufweisen, Haftvermittler, wie organofunktionelle Silan oder Siloxane, beispielsweise aminofunktionelle Silane oder Siloxane, Dispergierhilfsmittel, Pigmente, Fungizide und rheologische Additive.

Beispiele für verstärkende Füllstoffe, also Füllstoffe mit einer spezifischen BET-Oberfläche von mindestens 50 $m^2/g$ sind pyrogen erzeugte Siliciumdioxide und gefällte Siliciumdioxide. Die verstärkenden, wie die nicht verstärkenden Füllstoffe, können hydrophobiert sein durch die Behandlung mit hydrophob machenden Mitteln, wie durch die Behandlung mit Stearinsäure oder durch die Behandlung mit Organosilanen, -silazanen oder -siloxanen. Es kann eine Art von Füllstoff, es kann aber auch ein Gemisch von mindestens zwei Füllstoffen eingesetzt werden.

Die Organopolysiloxanmassen, die die erfindungsgemäßen Zusätze enthalten, sind vorzugsweise folgendermaßen aufgebaut:

(a) 10 bis 80 Gew.-%, bevorzugt 20 bis 70 Gew.-%, vernetzungsfähiges Organopolsiloxan
(b) 0 bis 40 Gew.-%, bevorzugt 10 bis 30 Gew.-%, nicht vernetzungsfähiger Weichmacher
(c) 0,5 bis 15 Gew.-%, bevorzugt 3 bis 10 Gew.-%, Vernetzungsmittel
(d) 0 bis 50 Gew.-%, bevorzugt 3 bis 10 Gew.-%, verstärkender Füllstoff
(e) 10 bis 50 Gew.-%, bevorzugt 20 bis 40 Gew.-%, nicht verstärkender Füllstoff
(f) 0 bis 10 Gew.-%, bevorzugt 1 bis 3 Gew.-%, Pigmente
(g) 0 bis 2 Gew.-%, bevorzugt 0,01 bis 1,0 Gew.-%, Katalysator
(h) 0 bis 10 Gew.-%, bevorzugt 0,1 bis 3 Gew.-%, Haftvermittler und
(i) 0,1 bis 20 Gew.-%, bevorzugt 0,1 bis 3 Gew.-%, Borverbindung,

wobei die Summe der Bestandteile 100 Gew.-% betragen muß.

Die erfindungsgemäßen zu flammabweisenden Elastomeren vernetzbaren Organopolysiloxanmassen können für alle Zwecke verwendet werden, für die zu flammabweisenden Elastomeren vernetzbaren Organopolysiloxane verwendet werden können, beispielsweise als Fugendichtungsmassen zwischen Bauteilen im Hoch- und Tiefbau, als Abdichtungsmasse bei Verglasungen und als Abdichtungs- und Vergußmassen bei Kabel oder Rohrdurchführungen durch nichtbrennbare Baustoffe.

In den folgenden Beispielen beziehen sich alle Angaben von Prozentsätzen auf das Gewicht, soweit nichts anderes angegeben ist.

**Beispiel 1**

Folgende Rezepturbestandteile werden nacheinander in einem geeigneten Mischer zusammengebracht:

| | |
|---|---|
| 30% | $\alpha,\omega$-Dihydroxydimethylpolysiloxan, vernetzungsfähig, Viskosität von 80.000 mPa • s bei 25°C |
| 19,9% | Weichmacher, Trimethylsiloxygruppen aufweisendes Dimethylpolysiloxan, nicht vernetzungsfähig, Viskosität von 100 mPa • s bei 25°C |
| 6% | Methyltrisbutanonoximosilan als Vernetzer |
| 3% | pyrogene Kieselsäure mit einer spezifischen Oberfläche von etwa 150 $m^2/g$, z.B. HDK V 15 der Wacker-Chemie GmbH, München, als verstärkender Füllstoff |
| 38% | Kalzinierter Kaolin, z.B. Icecap K der Fa. Burgess Pigment Company, USA, als nicht verstärkender Füllstoff |
| 2% | $\gamma$-Aminopropyltriethoxysilan als Haftvermittler |
| 1% | Borcarbid gemahlen der Elektroschmelzwerke Kempten GmbH, München, als erfindungsgemäßes Additiv |
| 0,1% | Organozinnkatalysator zur Vernetzung. |

Die fertige Masse ist hellgrau und kann bei Bedarf durch geeignete Pigmente in verschiedenen erwünschten Farbtönen eingefärbt werden. Dieses standfeste Gemisch wird unter Ausschluß von Feuchtigkeit in handelsüblichen Kartuschen gelagert. Bevorzugte Anwendung ist die Abdichtung von vertikalen Bauwerksfugen oder Deckenfugen, bei denen das Material über Kopf appliziert wird.

Für die Brandprüfung wird die Masse als 12 x 12 mm breite und 500 mm lange Fuge zwischen 2 Blöcke aus Leichtbeton mit einer Rundschnur aus geeignetem Material (z.B. geschlossenzelliges, geschäumtes Polyethylen, Keramikfasern o.ä.) als Hinterfüllmaterial eingebracht und bei Normklima ausgehärtet. Nach 4 Wochen Vorlagerung werden die Proben in einem Kleinbrandofen, wie er in DIN 4102, Teil 8 beschrieben wird, einem Brandtest nach der Einheitsbrandkurve nach DIN 4102, Teil 2 unterworfen. Der Temperaturverlauf im Brandraum und auf der Rückseite der Fuge wird mit 3 Thermoelementen aufgezeichnet. Die Temperaturen auf der Rückseite der Fuge, die in der Tabelle 1 angegeben sind bzw. die Werte, die der Fig. 1 zugrundeliegen, sind Mittelwerte aus 2 Meßelementen.

Eine Temperaturdifferenz zwischen Solltemperatur des Ofenraums und Fugenrückseite ist ein Maß für die thermische Isolierwirkung der zersetzten Fugenmasse. Das Aussehen der Fuge und die Konsistenz der Fugenmasse werden nach 60 Minuten Brandversuch beurteilt. Die Ergebnisse sind in Tabelle 1 und Fig. 1 angegeben.

**Vergleichsversuch 1**

Dieselben Bestandteile wie in Beispiel 1, aber ohne Borcarbid, werden gemischt und der Prüfung unterzogen.

**Vergleichsversuch 2**

Dieselben Bestandteile wie in Beispiel 1, aber mit natürlichem, gemahlenen Calciumcarbonat (Omya BLR3 der Fa. Omya, Köln) anstelle des Aluminiumsilikates (Kalzinierter Kaolin), werden gemischt und der Prüfung unterzogen.

**Vergleichsversuch 3**

Dieselben Bestandteile wie in Vergleichsversuch 2, aber ohne Borcarbid, werden gemischt und der Prüfung unterzogen.

**Vergleichsversuch 4**

Dieselben Bestandteile wie in Beispiel 1, aber mit organosilanoberflächenbehandeltem Aluminiumoxidhydrat (Martinal OL der Fa. Martinswerke, Bergheim) anstelle des Aluminiumsilikates (Kalzinierter Kaolin), werden gemischt und der Prüfung unterzogen.

**Beispiel 2**

Folgende Rezepturbestandteile werden nacheinander in einem geeigneten Mischer zusammengebracht:

| | |
|---|---|
| 66% | $\alpha,\omega$-Dihydroxydimethylsiloxan, vernetzungsfähig, Viskosität von 12.000 mPa • s bei 25°C |
| 33% | Quarzmehl, gemahlen, z.B. Sicron SF 600 der Fa. Quarzwerke GmbH, Frechen als nicht verstärkender Füllstoff |
| 1% | Borcarbid analog Beispiel 1. |

Dieses Gemisch ist fließfähig und bei Normalbedingungen lagerfähig. Vor der Anwendung wird zur Vernetzung 3% eines Gemisch aus Tetraethoxysilan und Organozinnkatalysator zugegeben und intensiv vermischt. Fließfähige Mischungen werden zum Verguß von horizontalen Maueröffnungen bevorzugt. Die Vorbereitung der Prüfkörper für den Brandversuch und der Brandtest erfolgt analog zu Beispiel 1.

**Beispiel 3**

Dieselben Bestandteile wie in Beispiel 2, aber anstelle von Borcarbid wird Zirkonborid gemahlen der Elektroschmelzwerke Kempten GmbH, München, verwendet, werden gemischt und der Prüfung unterzogen.

**Beispiel 4**

Dieselben Bestandteile wie in Beispiel 2, aber anstelle von Borcarbid wird Calciumborid gemahlen der Elektroschmelzwerke Kempten GmbH, München, verwendet, werden gemischt und der Prüfung unterzogen.

**Vergleichsversuch 5**

Dieselben Bestandteile wie in Beispiel 2, aber ohne Borcarbid, werden gemischt und der Prüfung unterzogen.

## Tabelle 1

| Versuch | Beurteilung nach 60 Minuten | Temperatur nach 60 Minuten | Bemerkungen |
|---|---|---|---|
| Beispiel 1 | Fuge einwandfrei | 331 °C | Bildung eines festen schaumartigen Materials durch Volumenvergrößerung an der Oberfläche, kein Austritt von Brandgasen an der Fugenrückseite |
| Vergleichsversuch 1 | Fuge hat wenige Querrisse | 925 °C *) | keine Volumenvergrößerung, Material ist weich, Brandgase treten durch die Risse aus |
| Vergleichsversuch 2 | Fuge hat viele Querrisse | 925 °C *) | Volumabnahme durch Zersetzung, Material ist weich, Brandgase treten durch die Risse aus |
| Vergleichsversuch 3 | Fuge hat viele Querrisse | 925 °C *) | Volumabnahme durch Zersetzung, Material ist sehr weich, Brandgase treten durch die Risse aus |
| Vergleichsversuch 4 | kein Fugenmaterial übrig | 925 °C *) | Das Fugenmaterial hat sich völlig zersetzt, Brandgase treten nach etwa 35 Minuten durch zahlreiche Risse aus |
| Beispiel 2 | Fuge einwandfrei | 335 °C | Bildung eines festen schaumartigen Materials durch Volumenvergrößerung an der Oberfläche, kein Austritt von Brandgasen an der Fugenrückseite |
| Beispiel 3 | Fuge einwandfrei | 342 °C | Bildung eines festen schaumartigen Materials durch Volumenvergrößerung an der Oberfläche, kein Austritt von Brandgasen an der Fugenrückseite |
| Beispiel 4 | Fuge einwandfrei | 338 °C | Bildung eines festen schaumartigen Materials durch Volumenvergrößerung an der Oberfläche, kein Austritt von Brandgasen an der Fugenrückseite |
| Vergleichsversuch 5 | Fuge hat wenige Querrisse | 925 °C *) | keine Volumenvergrößerung, Material ist weich, Brandgase treten durch die Risse aus |

*) Durch aufgetretene Querrisse und dadurch bedingtes Austreten der Brandgase an der Rückseite der Fuge während der Brandprüfung sind die Solltemperatur des Ofeninnenraums und der Fugenrückseite am Ende des Versuches nach 60 Minuten gleich.

In Fig. 1 bedeutet

T Temperatur in °C

t Versuchsdauer in Minuten

—■— Solltemperatur Ofenraum

—▲— Beispiel 1, 2, 3 und 4

—●— Vergleichsversuch 1, 2, 3 und 5

—□— Vergleichsversuch 4

**Patentansprüche**

1. Verwendung von Borverbindungen ausgewählt aus der Gruppe von Borcarbid und Metallboriden im Gemisch mit nicht verstärkenden Füllstoffen, mit der Maßgabe, daß mindestens 75 Gew.-% der nicht verstärkenden Füllstoffe bis 1200°C thermisch stabil sind, als Flammschutzmittel in zu flammabweisenden Elastomeren vernetzbaren Organopolysiloxanmassen.

2. Verwendung nach Anspruch 1, dadurch gekennzeichnet, daß als Borverbindungen solche ausgewählt aus der Gruppe von Borcarbid, Zinkborid, Aluminiumborid, Titanborid und Calciumborid eingesetzt werden.

3. Verwendung nach Anspruch 1 oder 2, dadurch gekennzeichnet, daß als nicht verstärkende Füllstoffe, die bis 1200°C stabil sind, solche ausgewählt aus der Gruppe von natürlichen und synthetischen Siliciumdioxiden, amorphe und kristalline Quarze, Silikate, silikatische Füllstoffe und natürliche und gefällte Bariumsulfate eingesetzt werden.

4. Verwendung nach Anspruch 1, 2 oder 3, dadurch gekennzeichnet, daß Borverbindungen in Mengen von 0,1 bis 20 Gew.-%, bezogen auf das Gesamtgewicht der zu flammabweisenden Elastomeren vernetzbaren Organopolysiloxanmassen, eingesetzt werden.

5. Verwendung nach einem der Ansprüche 1 bis 4, dadurch gekennzeichnet, daß nicht verstärkende Füllstoffe in Mengen von 10 bis 50 Gew.-%, bezogen auf das Gesamtgewicht der zu flammabweisenden Elastomeren vernetzbaren Organopolysiloxanmassen, eingesetzt werden.

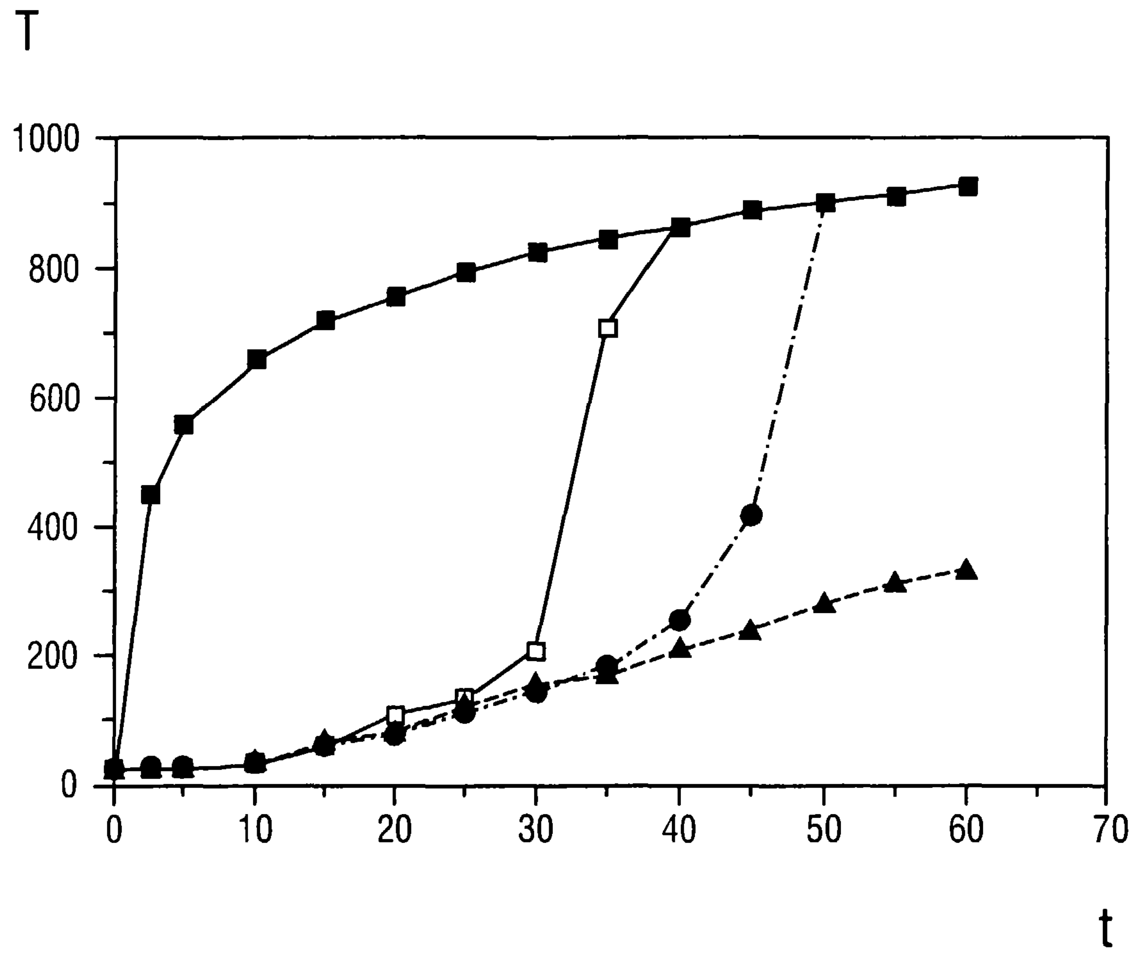


Fig. 1

Europäisches Patentamt

# EUROPÄISCHER RECHERCHENBERICHT

Nummer der Anmeldung
EP 97 10 8281

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | DATABASE WPI<br>Section Ch, Week 7622<br>Derwent Publications Ltd., London, GB;<br>Class A25, AN 76-41127X<br>XP002037346<br>& JP 51 045 145 A (IG GIJUTSU KEN KK) ,<br>17.April 1976<br>* Zusammenfassung *<br>--- | 1-5 | C08K3/38<br>C08L83/04 |
| Y | EP 0 505 940 A (DAINIPPON INK & CHEMICALS)<br>30.September 1992<br>* Seite 7 - Seite 9 *<br>* Anspruch 1 *<br>----- | 1-5 | |

RECHERCHIERTE SACHGEBIETE (Int.Cl.6)
C08K

Der vorliegende Recherchenbericht wurde für alle Patentansprüche erstellt

| Recherchenort | Abschlußdatum der Recherche | Prüfer |
|---|---|---|
| DEN HAAG | 11.August 1997 | Siemens, T |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)